# EUROPÄISCHE PATENTSCHRIFT

(11) **EP 0 517 350 B1**
(45) Veröffentlichungstag und Bekanntmachung des Hinweises auf die Patenterteilung: **19.04.1995**
(21) Anmeldenummer: 92250143.2
(22) Anmeldetag: 05.06.1992
(51) Int. Cl.: B65G 23/10

(54) **Kettenantrieb, insbesondere zum Treiben von Stetigförderern**
Chain gear particularly for driving continuous conveyors
Engrenage à chaîne particulièrement pour entrainer des transporteurs continus

(30) Priorität: 06.06.1991 DE 4118748
(43) Veröffentlichungstag der Anmeldung: 09.12.1992
(73) Patentinhaber: Deutsche Bahn Aktiengesellschaft, 10365 Berlin (DE)
(72) Erfinder: Rüger, Rolf, Dipl.-Ing., D-38855 Wernigerode (DE); Sichting, Wolfgang, D-38889 Blankenburg (DE); Tautz, Werner, D-38889 Blankenburg (DE)

(56) Entgegenhaltungen:
- EP-A- 0 380 203
- WO-A-82/00990
- GB-A- 1 257 578
- US-A- 3 674 130

## Beschreibung

Die Erfindung betrifft ein Kettengetriebe zum Treiben von Stetigförderern, die sowohl als Gurtförderer als auch als Gliederförderer ausgebildet sein können.

Es sind Antriebe für Gurtförderer bekannt, die mindestens aus einer Antriebstrommel mit der erforderlichen Antriebseinheit sowie weiteren Umlenkrollen, Tragrollen und meist auch Ablenkrollen bestehen. Die Antriebstrommel und die Tragrollen werden von dem endlosen Gurt umschlungen. Zur Erhöhung des Umschlingungswinkels an der Antriebstrommel wird die Ablenkrolle eingesetzt. Das von der Antriebseinheit erzeugte Drehmoment wird auf die Antriebstrommel übertragen. Unter Ausnutzung der Reibung zwischen der Antriebstrommel und dem Gurt wird das Drehmoment in eine Gurtzugkraft, die den Gurt in Bewegung setzt und hält, umgewandelt. Der Schwachpunkt dieses Antriebes ist der geringe Reibwert zwischen Antriebstrommel und Gurt, was sich bei langen Förderstrecken, großer Breite des Gurtes oder einem sehr großen Füllquerschnitt über dem Gurt äußerst nachteilig auf das Leistungsverhalten des Gurtförderers auswirkt.

Des weiteren sind Antriebe für Gliederförderer bekannt, bei denen ein endloses Zugmittel oder mehrere endlose Zugmittel, d. h. Kettenstränge aus Rundstahlketten , Laschenketten oder Sonderketten in Verbindung mit einer Anzahl gleichartiger Förderelemente, wie Platten, Tröge, Kästen usw., die in gleichen Abständen angeordnet sind, das Gliederband bilden. Die Kettenstränge sind neben oder unter dem Förderelement angeordnet. Die Verbindung vom Kettenstrang zum Förderelement wird mittels der Befestigungslappen, die sich ein- oder beidseitig an den den Kettenstrang bildenden Kettengliedern befinden, hergestellt.

Die Abstützung des Gliederbandes erfolgt meist mittels Laufrollen, die u. a. mit einem Bund, d. h. einem Spurkranz, versehen sind. Die Laufrollen, die meist außerhalb des Gliederbandes angeordnet sind, rollen auf Führungsbahnen auf. Der eigentliche Antrieb für den Gliederförderer besteht aus einer Antriebseinheit mit Kettenrädern oder Kettensternen, die in den Kettenstrang oder die Kettenstränge eingreifen. Gleichzeitig erfolgt über diese Kettenräder oder Kettensterne die Umlenkung des Kettenstranges. Die Antriebe können am Kopf oder/und am Schluß des Gliederbandes angeordnet sein. Bei Förderlängen von größer 400 Metern, einem Fördergutstrom von größer 300 Tonnen/Stunde oder Steigungen mit einem Winkel bis 50 Grad sind Zwischenantriebe möglich.

Der Erfindung liegt die Aufgabe zugrunde, ein Kettengetriebe insbesondere zum Treiben von Stetigförderern zu schaffen, das auf engem Raum untergebracht werden kann und mit dem die Stetigförderer ebenfalls zur Speicherung von größeren Mengen an Schüttgut genutzt werden können. Ein voll beladener, d. h. ein im Speicherbetrieb arbeitender Stetigförderer muß nach dem Ausschalten und erneutem Einschalten des Selbigen unter voller Last ohne Schwierigkeiten anlaufen.

Gemäß der Erfindung ist ein Kettengetriebe, das parallel und entweder einseitig oder zu beiden Seiten eines Gliederförderers oder Gurtförderers angeordnet und mit diesem mittels Befestigungslappen verbunden ist, durch die im Patentanspruch vorgeschlagene technische Lehre gekennzeichnet. Die erfindungsgemäße Gestaltung der Kettenlaschen der Stahlgelenkkette läßt die Anordnung einer beliebigen Anzahl von Antriebseinheiten mit jeweils einem in das Zahnprofil der Kettenlaschen eingreifenden Zahnrad zu. Dies ist von Vorteil, wenn die Zugspannung in der Stahlgelenkkette durch eine hohe Belastung, z. B. beim Anlaufen eines zur Materialspeicherung genutzten Gurt- oder Gliederförderers, stark ansteigt. Die maximale Zugspannung in der Stahlgelenkkette wird aufgrund der Anordnung von Antriebseinheiten gemäß dem Stand der Technik im erfindungsgemäßen Kettenantrieb entsprechend der Anzahl der Antriebseinheiten in Teilspannungen zerlegt. Dadurch können die Stahlgelenkkette und auch die Antriebseinheiten durch kleinere Bauweisen als herkömmlich notwendig ersetzt werden. Weiterhin ist es möglich, mehrere erfindungsgemäße Kettengetriebe parallel anzuordnen, um z. B. einem dazwischen befindlichen Stetigförderer zu betreiben. Die Synchronisation der Kettengetriebe erfolgt, wenn sie erforderlich ist, vorzugsweise über die auf einer Achse angeordneten Umlenkräder. Die Umlenkräder sind dabei durch Kettenräder auszutauschen. Die Verzahnung der Kettenlaschen kann wahlweise ausgeführt sein; Außenlasche-Innenlasche-Innenlasche-Außenlasche oder nur Außenlasche-Innenlasche.

Die Erfindung wird anhand eines Ausführungsbeispieles beschrieben. Es zeigen
- Fig. 1: ein Kettengetriebe
- Fig. 2: einen Abschnitt einer Stahlgelenkkette mit eingreifenden Zahnrad einer Antriebseinheit
- Fig. 3: eine Schnittdarstellung der Ansicht nach Fig 2.

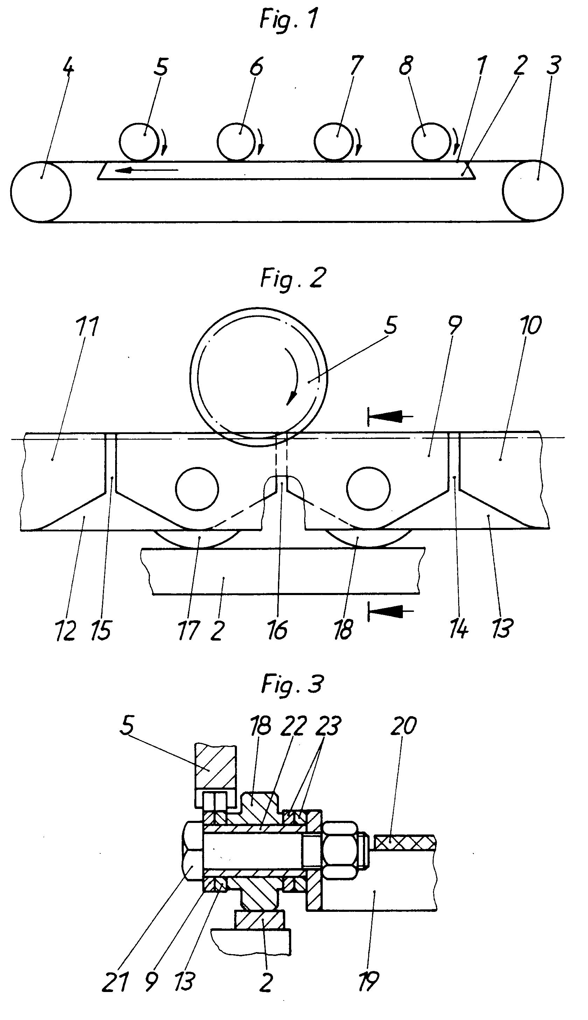

In Fig. 1 ist ein Kettengetriebe dargestellt, das aus einer endlosen Stahlgelenkkette 1, einer Führungsbahn 2, nichtangetriebenen Umlenkrollen 3, 4 und jeweils einem in das außenseitige Zahnprofil der Kettenlaschen 9, 10, 11, 12, 13 nach Fig. 2 der Stahlgelenkkette 1 eingreifenden Zahnrad 5, 6, 7, 8 mit einer vorgeordneten und nicht näher bezeichnenden Antriebseinheit besteht. Das jeweilige Zahnrad 5, 6, 7, 8 ist außerhalb des Umschlingungsfeldes der Stahlgelenkkette 1 angeordnet. Die Drehbewegung des jeweiligen Zahnrades 5, 6, 7, 8 wird in eine Linearbewegung der Stahlgelenkkette 1 umgesetzt. Das jeweilige Zahnrad 5, 6, 7, 8 kann an beliebiger Stelle der Stahlgelenkkette 1, d. h. mit oben genannter Einschränkung, mit selbiger zum Eingriff gebracht werden. Zur Erhöhung der Biegesteifigkeit in der Stahlgelenkkette 1 ist unter anderem unter dieser die Führungsbahn 2 angeordnet.

In Fig. 2 ist ein treibendes Zahnrad 5 einer Antriebseinheit, das in das Zahnprofil einer Kettenlasche 9 der Stahlgelenkkette 1 nach Fig. 1 eingreift, dargestellt. Die Kettenlaschen 9, 10, 11, 12, 13, sowohl Innenlaschen als auch Außenlaschen, bilden im gestreckten Zustand der Stahlgelenkkette 1 nach Fig. 1 eine Zahnstange, die in der Krümmungsrichtung an den Umlenkrollen 3, 4 nach Fig. 1 gelenkig aber auf dem Abschnitt zwischen den Umlenkrollen 3, 4 nach Fig. 1 entgegen der Krümmungsrichtung biegesteif ist. Die notwendige Biegesteifigkeit wird durch die sich in den Teilfugen 14, 15, 16 berührenden verlängerten Enden der Kettenlaschen 9, 10, 11, 12, 13 sowie das Abstützen der Stahlgelenkkette 1 nach Fig. 1 mittels der Rollen 17, 18 auf der Führungsbahn 2 erzielt.

In Fig. 3 ist eine mögliche Bauart der Verbindung des Kettengetriebes mit einem Stetigförderer dargestellt.

Auf einem Verbindungssteg 19 ist die Abdichtauflage 20 angeordnet. Der Verbindungssteg 19 sitzt auf einem Kettenbolzen 21, der gleichzeitig eine Buchse 22 trägt. Der Kettenbolzen 21, die Buchse 22 und der Verbindungssteg 19 sind fest, aber lösbar, untereinander verspannt. Die Kettenlaschen 9, 13, die Rolle 18 und die normalem Kettenlaschen 23 sind beweglich auf der Buchse 22 angeordnet. In das Zahnprofil der Kettenlaschen 9, 13 greift das Zahnrad 5. Die Rolle 18 berührt die Führungsbahn 2.

## Patentansprüche

1. Kettengetriebe, insbesondere zum Treiben von Stetigförderern, wobei das Kettengetriebe parallel und entweder einseitig oder zu beiden Seiten von Gurt- bzw. Gliederförderern angeordnet und mit diesen verbunden ist, dadurch gekennzeichnet, daß eine endlose Stahlgelenkkette (1) eine Führungsbahn und nichtangetriebene Rollen (3, 4) umschlingt wobei auf der führungsbahnabgewandten und rollenabgewandten Längsseite die Kettenlaschen (9, 10, 11, 12, 13) in Längsrichtung der Stahlgelenkkette (1) mit mindestens einem Zahn versehen sind, in das Zahnprofil der Kettenlaschen (9, 10, 11, 12, 13) ein Zahnrad (5, 6, 7, 8) einer jeweils vorgeordneten Antriebseinheit eingreift, das Zahnrad in beliebiger Anzahl und an beliebiger Stelle außerhalb des Umschlingungsbereiches der Stahlgelenkkette (1) angeordnet ist, die Kettenlaschen (9, 10, 11, 12, 13) verlängerte Enden aufweisen, die sich in Teilfugen (14, 15, 16) berühren und gegeneinander abstutzen, so daß das Zugtrum der Stahlgelenkkette (1) eine biegesteife Zahnstange bildet, die in der Umschlingungsrichtung beweglich ist.

## Claims

1. Chain gear, particularly for driving continuous conveyors, arranged parallel and on either one or both sides of belt or apron conveyors and connected with the same, characterized by the fact that an endless steel-link chain (1) encircles a guideway and non-driven rollers (3, 4), where the link plates of the chain (9, 10, 11, 12, 13) on the longitudinal side opposite the guideway and rollers are provided in the longitudinal direction of the steel-link chain (1) with at least one tooth, and where the toothed wheel (5, 6, 7, 8) of each of the drive units located above engages into the tooth profile of the link plates of the chain (9, 10, 11, 12, 13), and where the toothed wheels are arranged in any number and at any location outside the area of encirclement of the steel-link chain (1), and where the link plates of the chain (9, 10, 11, 12, 13) have extended ends which are in contact with and support each other at joints (14, 15, 16) so that the driving end of the steel-link chain (1) forms a rigid rack which is movable in the direction of encirclement.

## Revendications

1. Engrenage à chaîne, particulièrement pour entraîner des transporteurs continus, disposé parallèlement et soit d'un côté, soit de part et d'autre de transporteurs à courroie ou à palettes métalliques et lié à ces derniers, caractérisé par le fait qu'une chaîne articulée en acier sans fin (1) est enroulée autour d'une glissière et de poulies non entraînées (3, 4), sachant que les maillons de la chaîne (9, 10, 11, 12, 13) du côté longitudinal opposé à la glissière et aux poulies sont munis d'au moins une dent dans le sens longitudinal de la chaîne articulée en acier (1), que chacun des pignons (5, 6, 7, 8) d'éléments moteurs placés en amont vient s'engager dans le profil de la dent des maillons (9, 10, 11, 12, 13), que les pignons sont disposés en un nombre et en des points quelconques en dehors de la zone d'enroulement de la chaîne articulée en acier (19; que les maillons (9, 10, 11, 12, 13) présentent des extrémités allongées, qui se touchent et s'appuient réciproquement dans des joints de matrice (14, 15, 16), de sorte que le brin tendu de la chaîne articulée en acier (1) forme une crémaillère résistante à la flexion, laquelle est mobile dans le sens d'enroulement.
